# EUROPEAN PATENT APPLICATION

(11) **EP 4 741 109 A1**
(43) Date of publication of application: **13.05.2026**
(21) Application number: 25214342.5
(22) Date of filing: 07.11.2025
(51) Int. Cl.: B25F 5/02

(54) **BATTERY PACK INTERFACE FOR POWER TOOL**

(30) Priority: 08.11.2024 US 202463717936 P; 24.02.2025 US 202563762396 P
(71) Applicant: Milwaukee Electric Tool Corporation, Brookfield, WI 53005 (US)
(72) Inventor: SCHMITTINGER, Jeremy A, Brookfield, WI 53005 (US); FUJIMOTO, Douglas A, Brookfield, WI 53005 (US); TOBIN, James G, Brookfield, WI 53005 (US)
(74) Representative: Forresters IP LLP

(57) **Abstract**

A power tool includes a housing and a battery pack having a body with a first end and a second end opposite the first end, a positive battery terminal disposed on the first end of the body, and a negative battery terminal disposed on the first end of the body. The power tool further includes a battery pack interface supported by the housing and configured to receive the battery pack. The battery pack interface has a first cap with a plurality of resilient members configured to interact with the first end of the battery pack and a second cap configured to secure the battery pack within the battery pack interface.

## Description

### CROSS-REFERENCE TO RELATED APPLICATIONS

This application claims priority to co-pending U.S. Provisional Patent Application No. 63/762,396, filed February 24, 2025, and U.S. Provisional Patent Application No. 63/717,936, filed November 8, 2024, the entire contents of all of which are incorporated herein by reference.

### FIELD OF THE DISCLOSURE

The present disclosure relates to power tools and, more particularly, to a battery pack interface for power tools.

### BACKGROUND OF THE DISCLOSURE

Cordless power tools (e.g., reciprocating saw, drill, circular saw, jigsaw, etc.) are powered by various rechargeable batteries. A battery pack interface may be provided within the power tool to connect rechargeable batteries such as single-cell battery packs that may be used to power small devices.

### SUMMARY OF THE DISCLOSURE

The present disclosure provides, in one aspect, a power tool including a housing and a battery pack. The battery pack has a body with a first end and a second end opposite the first end, a positive battery terminal disposed on the first end of the body, and a negative battery terminal disposed on the first end of the body. Moreover, the power tool includes a battery pack interface supported by the housing and configured to receive the battery pack. The battery pack interface includes a first cap having a plurality of resilient members configured to interact with the first end of the battery pack. The battery pack interface also includes a second cap configured to secure the battery pack within the battery pack interface.

The present disclosure provides, in another aspect, a power tool including a housing and a battery pack interface supported by the housing. The battery pack interface includes an interface housing defining an interface axis extending centrally through the battery pack interface. The interface housing is configured to receive a battery pack. The battery pack interface further includes a first cap coupled to a first end of the housing. The first cap has at least one positive battery contact and at least one negative battery contact. The at least one negative battery contact is located closer to the interface axis than the at least one positive battery contact. The battery pack interface also includes a second cap removably coupled to a second end of the housing opposite the first end. The second cap is configured to secure the battery pack within the battery pack interface.

The present disclosure provides, in another aspect, a power tool including a housing, a battery pack including a positive battery terminal and a negative battery terminal concentric with the positive battery terminal, and a battery pack interface supported by the housing. The battery pack interface includes an interface housing configured to receive the battery pack and a first cap coupled to a first end of the housing. The first cap has a first set of resilient members positioned to interact with the positive battery terminal and a second set of resilient members positioned to interact with the negative battery terminal. The battery pack interface further includes a second cap removably coupled to a second end of the housing opposite the first end. The second cap has a spring configured to bias the battery pack against the first set of resilient members and the second set of resilient members.

### BRIEF DESCRIPTION OF DRAWINGS

FIG. 1 is a schematic illustration of a power tool including a battery pack interface according to an embodiment of the present disclosure.
FIG. 2 is a front view of a battery pack receivable within the battery pack interface of FIG. 1.
FIG. 3A is a perspective view of a positive battery terminal and a negative battery terminal of the battery pack of FIG. 2.
FIG. 3B is a perspective view of a positive battery terminal, a negative battery terminal, and an insulator according to another embodiment of the disclosure.
FIG. 4 is a perspective view of the battery pack interface of FIG. 1.
FIG. 5 is a perspective view of an interior housing of the battery pack interface of FIG. 1.
FIG. 6A is a top view of a terminal cap of the battery pack interface of FIG. 1.
FIG. 6B is a cross-sectional view of the terminal cap of FIG. 6A.
FIG. 7A is a front perspective view of an end cap of the battery pack interface of FIG. 1.
FIG. 7B is a rear perspective view of the end cap of FIG. 7A.
FIG. 8A is a perspective view of a terminal cap according to another embodiment of the present disclosure.
FIG. 8B is a cross-sectional view of the terminal cap of FIG. 8A.
FIG. 9A is a perspective view of a terminal cap according to another embodiment of the present disclosure.
FIG. 9B is another perspective view of the terminal cap of FIG. 9A with an insulator member removed.
FIG. 10A is a perspective view of a terminal cap according to another embodiment of the present disclosure.
FIG. 10B is top-down plan view of the terminal cap of FIG. 10A with a support body removed.
FIG. 11 is a cross-sectional view of a battery pack interface according to another embodiment of the present disclosure.
FIG. 12A is a perspective view of an end cap of the battery pack interface of FIG. 11, the end cap including a rubber bumper.
FIG. 12B is a bottom view of the end cap of the battery pack interface of FIG. 12A.
FIG. 13 is a perspective view of the rubber bumper of FIG. 12A.
FIG. 14 is a top perspective view of an end cap according to another embodiment of the present disclosure.
FIG. 15 is a bottom perspective view of the end cap of FIG. 14.
FIG. 16 is a cross-sectional view of the end cap of FIG. 14.
FIG. 17 is a perspective view of a battery pack that may cooperate with the end cap of FIG. 14.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

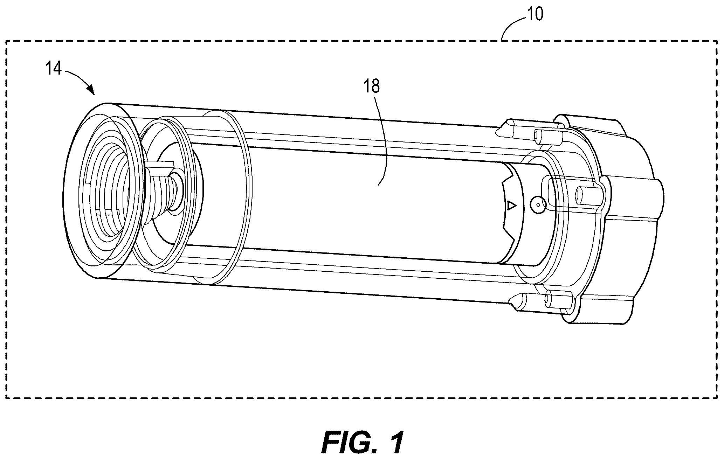

FIG. 1 schematically illustrates a power tool 10 including a battery pack interface 14. Examples of the power tool 10 may include a drill, a saw, a vacuum, a flashlight, and other devices. In some examples, the power tool 10 includes a housing for supporting the battery pack interface 14, a motor disposed within the housing, and an output drive. The battery pack interface 14 is configured to receive and electrically connect a single-cell battery pack 18 to the power tool 10, and thereby provide power to the power tool 10 for operation. When the motor is actuated, the motor is configured to drive the output drive. The motor is preferably a brushless DC motor. The output drive is configured to be coupled to a tool element that performs work on a workpiece.

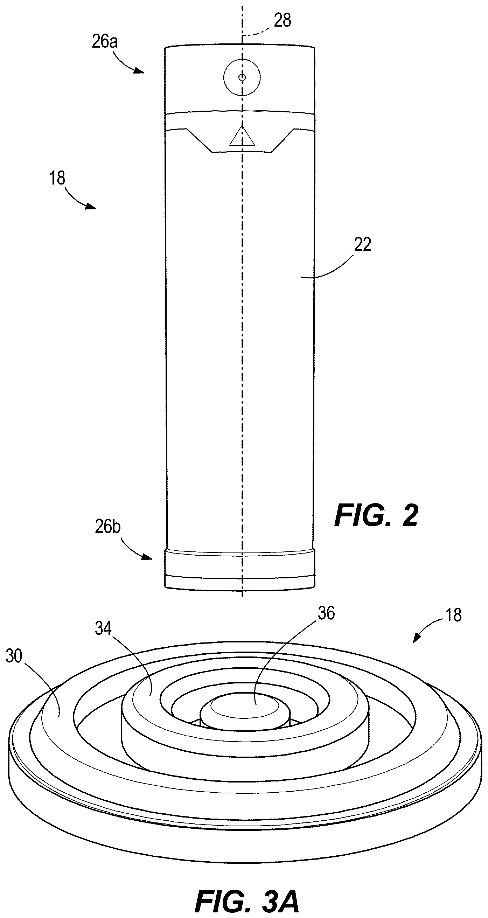

With reference to FIGS. 2 and 3A, the battery pack 18 is illustrated. In the illustrated embodiment, the battery pack 18 is a stand-alone rechargeable lithium USB battery that may be used to supply power to a device. The battery pack 18 may be charged when inserted into an electrical device that is electrically connected to a power source via a USB connector. As such, the battery pack 18 receives power through the electrical device to be recharged.

The battery pack 18 has a cylindrical shape so that the battery pack 18 may be received within the battery pack interface 14. The battery pack 18 includes a body 22 having a first end 26a and a second end 26b opposite the first end 26a. The body 22 defines a battery pack axis 28 extending centrally through the battery pack 18. A lithium-ion cell (not shown) is disposed within the body 22 of the battery pack 18. The lithium-ion cell has a positive cell terminal arranged at a center of the lithium-ion cell and a negative cell terminal forming an outer case of the lithium-ion cell.

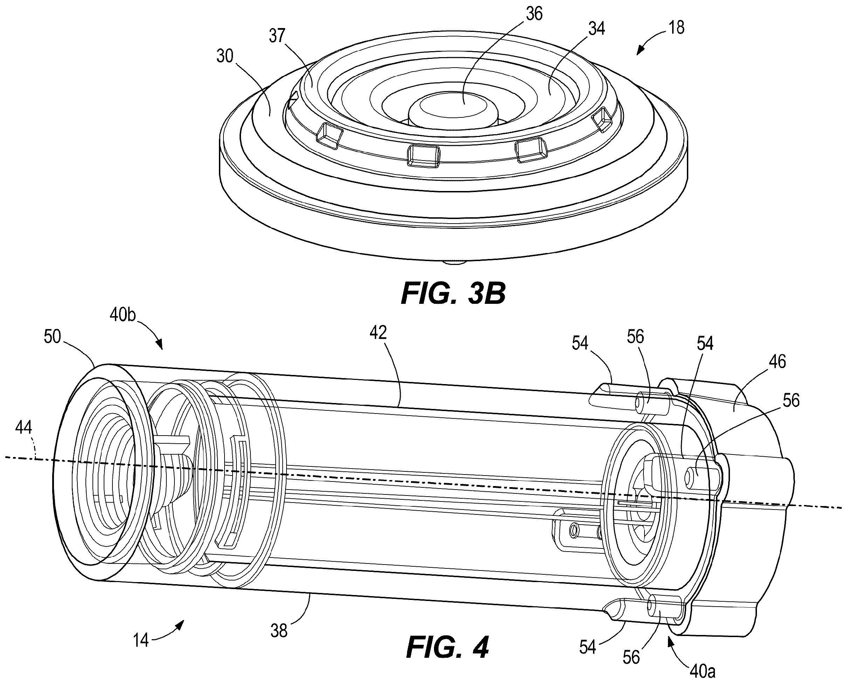

The battery pack 18 further includes a positive battery terminal 30, a negative battery terminal 34, and a negative temperature coefficient (NTC) thermistor 36 for monitoring a temperature of the battery pack 18. The positive battery terminal 30 and the negative battery terminal 34 are arranged on the first end 26a of the body 22 to provide a battery pack with positive and negative terminals arranged along the same end. The NTC thermistor 36 is positioned at a center portion of the battery pack 18. The negative battery terminal 34 has a ring shape and is positioned to surround the NTC thermistor 36. The positive battery terminal 30 also has a ring shape and is positioned to surround the negative battery terminal 34. As such, the negative battery terminal 34 is disposed between the positive battery terminal 30 and the NTC thermistor 36. Also, the negative battery terminal 34 is concentric with the positive battery terminal 30 and the NTC thermistor 36. In some embodiments, an insulator 37 (FIG. 3B) may be positioned between the positive battery terminal 30 and the negative battery terminal 34. In other embodiments, a gap may be defined between the positive battery terminal 30 and the negative battery terminal 34. An electrical interconnecting mechanism (not shown; e.g., wires, circuit board, etc.) is provided within the battery pack 18 to electrically connect the positive battery terminal 30 to the positive cell terminal of the lithium-ion cell and the negative battery terminal 34 to the negative cell terminal of the lithium-ion cell.

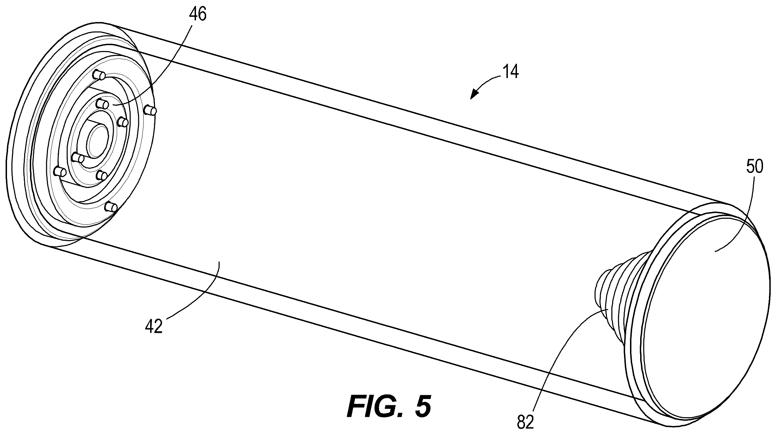

With reference to FIGS. 4 and 5, the battery pack interface 14 is illustrated. The battery pack interface 14 includes an interface housing or external housing 38. The external housing 38 of the battery pack interface 14 has a first end 40a and a second end 40b. An interior housing 42 of the battery pack interface 14 is formed within the external housing 38 and extends between the first and second ends 40a, 40b. The interior housing 42 is formed as a tube configured to receive the battery pack 18. The external housing 38 also defines an interface axis 44 extending centrally through the battery pack interface 14.

The battery pack interface 14 further includes a first cap or terminal cap 46 and a second cap or end cap 50. The terminal cap 46 is permanently coupled to the first end 40a of the external housing 38. The end cap 50 is removably coupled to the second end 40b of the external housing 38. The external housing 38 has multiple fastening recesses 54 and the terminal cap 46 has fastening holes (not shown) extending therethrough. The fastening holes of the terminal cap 46 are configured to align with the fastening recesses 54 when the terminal cap 46 is coupled with the external housing 38. As such, fasteners 56 (e.g., screws) may extend through the fastening recesses 54 and the fastening holes to couple the terminal cap 46 to the external housing 38. In some embodiments, cooperating clamshell halves may be provided for coupling the terminal cap 46 and its components to the external housing 38. In other embodiments, the terminal cap 46 may be coupled to the external housing 38 by other suitable coupling mechanisms.

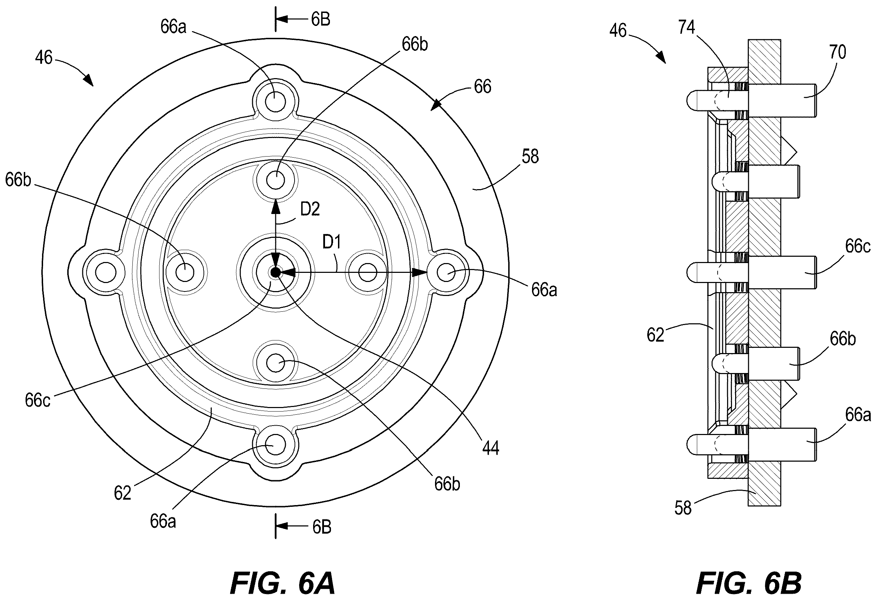

With reference to FIGS. 6A and 6B, the terminal cap 46 is illustrated. The terminal cap 46 includes a printed circuit board (PCB) 58 and an insulator member 62 positioned along the PCB 58. The terminal cap 46 further includes a plurality of resilient members 66 supported by the insulator member 62. In other embodiments, the insulator member 62 may be supported by another portion of the terminal cap 46. The PCB 58 is separated from the insulator member 62 while the PCB 58 is electrically connected to the terminal cap 46. The resilient members 66 are formed as pogo pins such that the resilient members 66 serve as battery contacts for the battery pack interface 14. The plurality of resilient members 66 is formed by a first set of resilient members or positive resilient members 66a, a second set of resilient members or negative resilient members 66b, and a NTC resilient member 66c.

Each resilient member 66 has a pin housing 70, a pin 74, and a spring (not shown). The pin 74 is movably coupled to the pin housing 70 between an extended position and a retracted position. The spring is disposed between the pin housing 70 and the pin 74. In the extended position, the spring is configured to bias the pin 74 in a direction away from the pin housing 70 such that a majority of the pin 74 extends out of the pin housing 70. In the retracted position, a force is applied to the pin 74 such that the spring is compressed and the majority of the pin 74 is positioned within the pin housing 70.

The positive resilient members 66a serve as positive battery contacts of the terminal cap 46. The negative resilient members 66b serve as negative battery contacts of the terminal cap 46. The NTC resilient member 66c serves as a NTC contact of the terminal cap 46 and is arranged at a central portion of the terminal cap 46 such that the NTC resilient member 66c is arranged along the interface axis 44. The negative resilient members 66b are spaced from each other at a substantially equal distance and surround the NTC resilient member 66c. The positive resilient members 66a are also spaced from each other at a substantially equal distance and surround the negative resilient members 66b. Each positive resilient member 66a is located at a first distance D1 from the interface axis 44. In other words, the first distance D1 extends between the interface axis 44 and a respective positive resilient member 66a. Each negative resilient member 66b is located at a second distance D2 from the interface axis 44. In other words, the second distance D2 extends between the interface axis 44 and a respective negative resilient member 66b. The first distance D1 is greater than the second distance D2. As such, the negative resilient members 66b are located closer to the central portion of the terminal cap 46 or the interface axis 44 than the positive resilient members 66a. In the illustrated embodiment, the terminal cap 46 includes four positive resilient members 66a and four negative resilient members 66b. In other embodiments, the terminal cap 46 may include other various amounts of resilient members 66.

Once the battery pack 18 is received within the battery pack interface 14, the plurality of resilient members 66 interact with the first end 26a of the battery pack 18 such that the plurality of resilient members 66 move to the retracted position. The positive resilient members 66a are positioned along the terminal cap 46 to interact with the positive battery terminal 30 of the battery pack 18. The negative resilient members 66b are positioned along the terminal cap 46 to interact with the negative battery terminal 34. As such, the positive and negative resilient members 66a, 66b are configured to provide an electrical connection between the battery pack 18 and the battery pack interface 14 so that the battery pack 18 is able to power the power tool 10. The NTC resilient member 66c is arranged to interact with the NTC thermistor 36 of the battery pack 18 for monitoring the temperature of the battery pack 18.

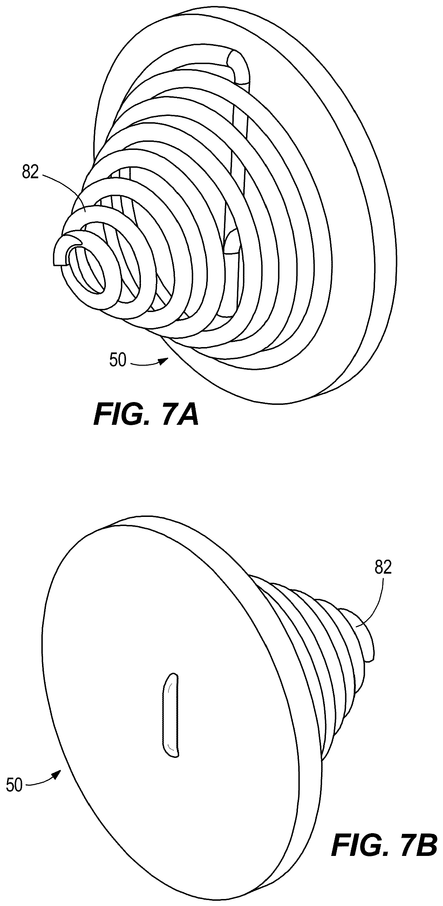

With reference to FIGS. 7A and 7B, the end cap 50 is illustrated. The end cap 50 includes a spring 82 coupled thereto. When the end cap 50 is coupled to the battery pack interface 14, the spring 82 is configured to bias and urge the battery pack 18 in a direction toward the terminal cap 46. As such, the battery pack 18 is pressed against the plurality of resilient members 66 so that an electrical connection is provided between the terminal cap 46 and the battery pack 18. In other embodiments, the end cap 50 may include a PCB.

To assemble the battery pack interface 14 with the battery pack 18, the end cap 50 is removed from the external housing 38 of the battery pack interface 14. The battery pack 18 is then loaded into the interior housing 42 by sliding the battery pack 18 into the interior housing 42 along the interface axis 44. The battery pack 18 is loaded into the interior housing 42 such that the first end 26a of the battery pack 18 interacts with the terminal cap 46 and permits the plurality of resilient members 66 to engage the positive battery terminal 30, the negative battery terminal 34, and the NTC thermistor 36 of the battery pack 18. The end cap 50 is then coupled to the battery pack interface 14 to bias the battery pack 18 against the terminal cap 46 and secure the battery pack 18 within the interior housing 42 of the battery pack interface 14.

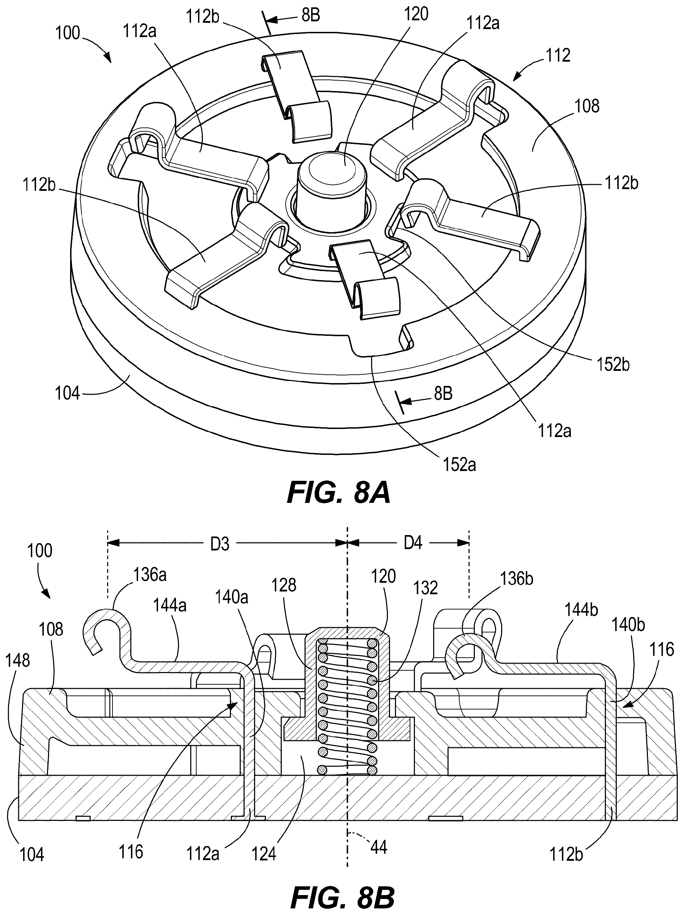

FIGS. 8A and 8B illustrate an alternative terminal cap 100 that may be incorporated with the battery pack interface 14. The illustrated terminal cap 100 includes a PCB 104, a support body 108 coupled to the PCB 104, and a plurality of resilient members 112. Each resilient member 112 extends through a respective slot 116 (FIG. 8B) defined within the support body 108 to be coupled to the PCB 104. The terminal cap 100 further includes a pin 120 disposed within a hole 124 extending through the support body 108 and at least partially defined by the PCB 104. The pin 120 defines a recess 128 configured to receive a spring 132 that biases the pin 120 in a direction away from the PCB 104. As such, the spring 132 is arranged between the pin 120 and the PCB 104 to permit the pin 120 to move between an extended position and a retracted position.

The plurality of resilient members 112 is formed by positive resilient members 112a and negative resilient members 112b. The positive resilient members 112a serve as positive battery contacts of the terminal cap 100. The negative resilient members 112b serve as negative battery contacts of the terminal cap 100. The pin 120 serves as a NTC contact of the terminal cap 100 and is arranged at a central portion of the terminal cap 100 such that the pin 120 is arranged along the interface axis 44.

Each resilient member 112a, 112b is formed as a leaf spring having a bump portion 136a, 136b, a connecting portion 140a, 140b, and an interconnecting portion 144a, 144b arranged to interconnect the bump portion 136a, 136b with the connecting portion 140a, 140b. The connecting portion 140a, 140b of each resilient member 112a, 112b is received within a respective slot 116 of the support body 108 and coupled to the PCB 104. The connecting portion 140a of each positive resilient member 112a is adjacent the pin 120 such that the bump portion 136a of each positive resilient member 112a is located a third distance D3 from the interface axis 44. In other words, the third distance D3 extends between the interface axis 44 and the bump portion 136a of a respective positive resilient member 112a. The connecting portion 140b of each negative resilient member 112b is adjacent an exterior surface 148 of the terminal cap 100 such that the bump portion 136b of each negative resilient member 112b is located at a fourth distance D4 from the interface axis 44. In other words, the fourth distance D4 extends between the interface axis 44 and the bump portion 136b of a respective negative resilient member 112b. The third distance D3 is greater than the fourth distance D4. As such, the bump portion 136b of each negative resilient member 112b is located closer to the central portion of the terminal cap 100 or the interface axis 44, than the bump portion 136a of each positive resilient member 112a.

In the illustrated embodiment, the terminal cap 100 includes three positive resilient members 112a and three negative resilient members 112b. The positive resilient members 112a are spaced from each other such that an individual negative resilient member 112b is positioned between adjacent positive resilient members 112a. In other embodiments, the terminal cap 100 may include other various amounts of resilient members 112.

Once the battery pack 18 is received within the battery pack interface 14, the plurality of resilient members 112 interact with the first end 26a of the battery pack 18. More specifically, the bump portion 136a, 136b of each resilient member 112a, 112b interacts with the first end 26a of the battery pack 18. The pin 120 also interacts with the first end 26a of the battery pack 18 such that the pin 120 moves to the retracted position. The positive resilient members 112a are positioned along the terminal cap 100 to interact with the positive battery terminal 30 of the battery pack 18. The negative resilient members 112b are positioned along the terminal cap 46 to interact with the negative battery terminal 34 of the battery pack 18. When the plurality of resilient members 112 interact with the first end 26a of the battery pack 18, the bump portion 136a, 136b of each resilient member 112a, 112b is pressed against the support body 108 and received within a respective groove 152a, 152b defined within the support body 108. The positive and negative resilient members 112a, 112b are configured to provide an electrical connection between the battery pack 18 and the battery pack interface 14 so that the battery pack 18 is able to power the power tool 10. The pin 120 is arranged to interact with the NTC thermistor 36 of the battery pack 18 for monitoring the temperature of the battery pack 18.

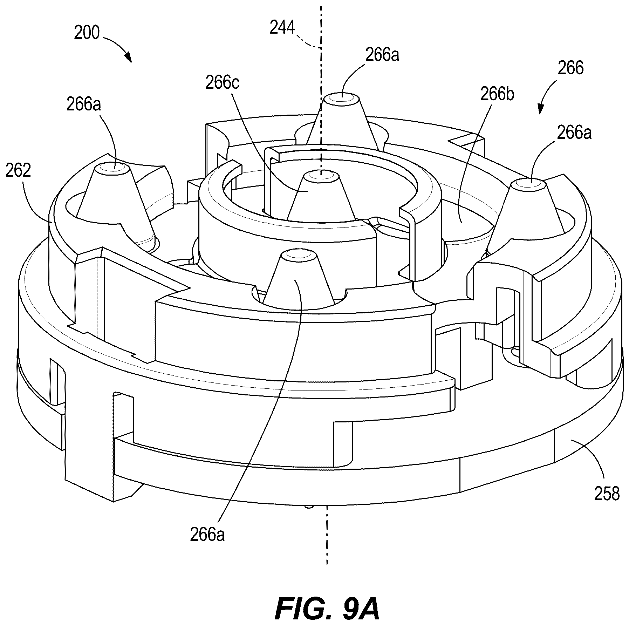

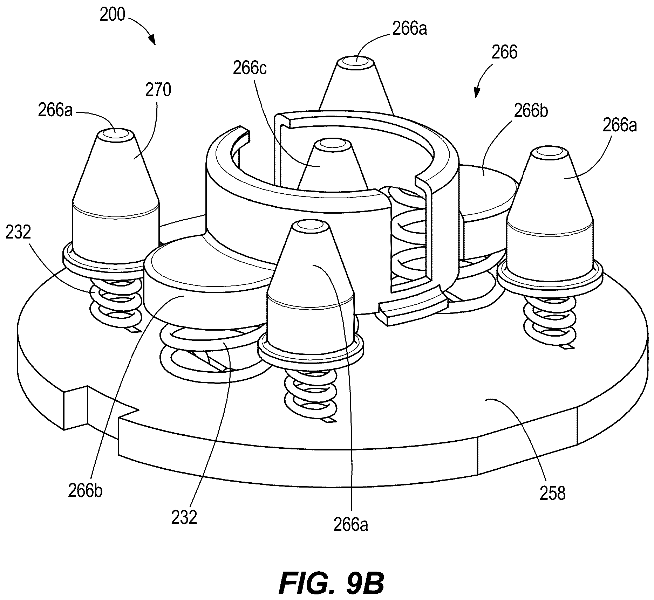

FIGS. 9A and 9B illustrate a terminal cap 200 according to another embodiment that may be incorporated with the battery pack interface 14. The terminal cap 200 includes a printed circuit board (PCB) 258 and an isolator, or support body 262, positioned along the PCB 258. The terminal cap 200 further includes a plurality of resilient members 266 supported by the support body 262. In other embodiments, the support body 262 may be supported by another portion of the terminal cap 200. The PCB 258 is separated from the support body 262 while the PCB 258 is electrically connected to the terminal cap 200. The resilient members 266 are formed as pogo pins such that the resilient members 266 serve as battery contacts for the battery pack interface 14. The plurality of resilient members 266 is formed by a first set of resilient members or positive resilient members 266a, a second set of resilient members or negative resilient members 266b, and a NTC resilient member 266c.

Each resilient member 266 has a pin housing 270, a pin (not shown), and a spring 232. The pin is movably coupled to the pin housing 270 between an extended position and a retracted position. The spring is disposed between the pin housing 270 and the pin. In the extended position, the spring is configured to bias the pin in a direction away from the pin housing 270 such that a majority of the pin extends out of the pin housing 270. In the retracted position, a force is applied to the pin such that the spring is compressed and the majority of the pin is positioned within the pin housing 270.

The positive resilient members 266a serve as positive battery contacts of the terminal cap 200. The negative resilient members 266b serve as a negative battery contact of the terminal cap 200. The NTC resilient member 266c serves as a NTC contact of the terminal cap 200 and is arranged at a central portion of the terminal cap 200 such that the NTC resilient member 266c is arranged along an interface axis 244. The negative resilient members 266b are circular flat plates and are positioned at a substantially equal distance such that the negative resilient members 266b surround the NTC resilient member 266c. The positive resilient members 266a are also spaced from each other at a substantially equal distance and surround the negative resilient members 266b. The negative resilient members 266b are located closer to the central portion of the terminal cap 200 or the interface axis 244 than the positive resilient members 266a. In the illustrated embodiment, the terminal cap 200 includes four positive resilient members 266a and two negative resilient members 266b. In other embodiments, the terminal cap 46 may include other various amounts of resilient members 266.

Once the battery pack 18 is received within the battery pack interface 14, the plurality of resilient members 266 interact with the first end 26a of the battery pack 18 such that the plurality of resilient members 266 move to the retracted position. The positive resilient members 266a are positioned along the terminal cap 200 to interact with the positive battery terminal 30 of the battery pack 18. The negative resilient members 266b are positioned along the terminal cap 200 to interact with the negative battery terminal 34. As such, the positive and negative resilient members 266a, 266b are configured to provide an electrical connection between the battery pack 18 and the battery pack interface 14 so that the battery pack 18 is able to power the power tool 10. The NTC resilient member 266c is arranged to interact with the NTC thermistor 36 of the battery pack 18 for monitoring the temperature of the battery pack 18.

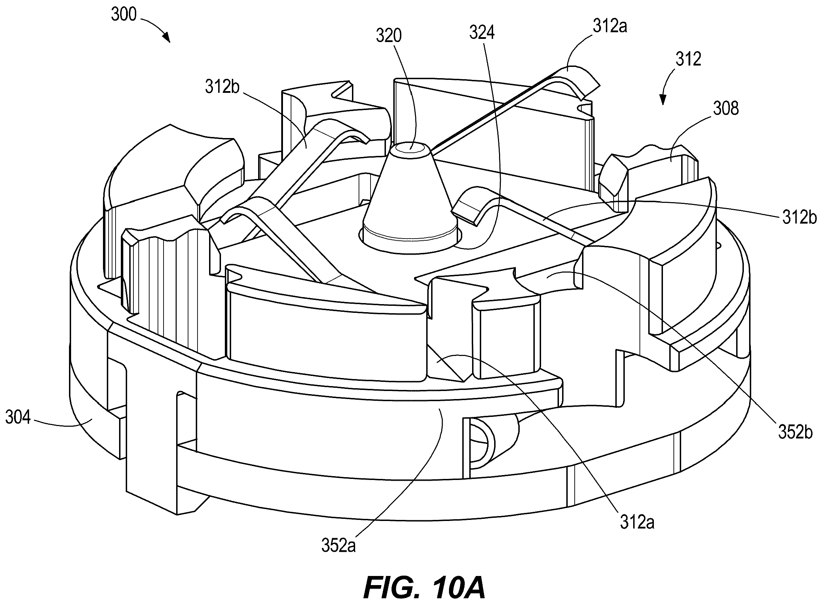

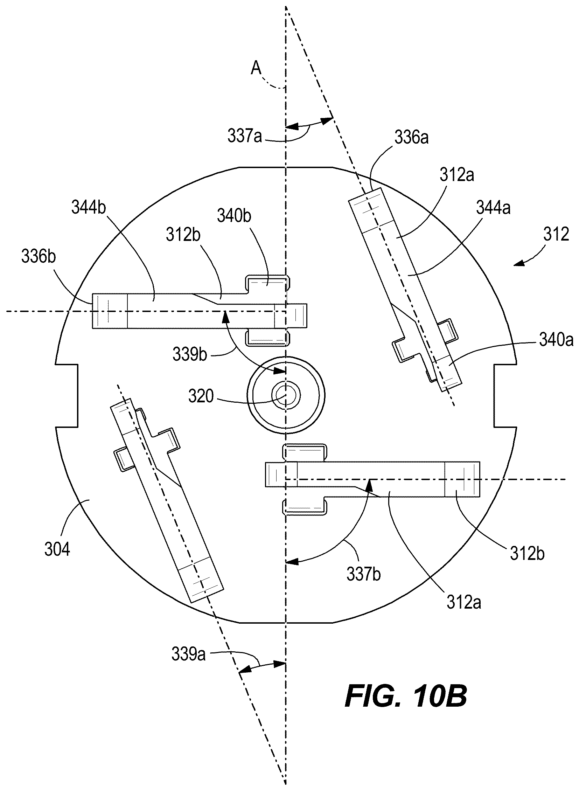

FIGS. 10A and 10B illustrate an alternative terminal cap 300 that may be incorporated with the battery pack interface 14. The illustrated terminal cap 300 includes a PCB 304, an isolator, or support body 308, coupled to the PCB 304, and a plurality of resilient members 312. Each resilient member 312 extends through a respective slot (not shown) defined within the support body 308 to be coupled to the PCB 304. The terminal cap 300 further includes an NTC resilient member, or pin, 320 disposed within a hole 324 extending through the support body 308 and at least partially defined by the PCB 304. The pin 320 is configured to receive a spring (not shown) that biases the pin 320 in a direction away from the PCB 304. As such, the spring is arranged between the pin 320 and the PCB 304 to permit the pin 320 to move between an extended position and a retracted position.

The plurality of resilient members 312 is formed by positive resilient members 312a and negative resilient members 312b. The positive resilient members 312a serve as positive battery contacts of the terminal cap 300. The negative resilient members 312b serve as negative battery contacts of the terminal cap 300. The pin 320 serves as a NTC contact of the terminal cap 300 and is arranged at a central portion of the terminal cap 300 such that the pin 320 is arranged along the interface axis 44.

Each resilient member 312a, 312b is formed as a leaf spring having a bump portion 336a, 336b, a connecting portion 340a, 340b, and an interconnecting portion 344a, 344b arranged to interconnect the bump portion 336a, 336b with the connecting portion 340a, 340b. The connecting portion 340a, 340b of each resilient member 312a, 312b is received within a respective slot of the support body 308 and coupled to the PCB 304.

In the illustrated embodiment, the terminal cap 300 includes two positive resilient members 312a and two negative resilient members 312b. The positive resilient members 312a are spaced from each other such that an individual negative resilient member 312b is positioned between adjacent positive resilient members 312a. In other embodiments, the terminal cap 300 may include other various amounts of resilient members 312.

The resilient members 312 are positioned in a spiral shape. For example, one of the positive resilient members 312a is positioned at an angle 337a to a central axis A and the other of the positive resilient members 312a is positioned at an alternate exterior angle 339a to the central axis A. In the present embodiment, the angle 337a is a 45-degree angle and the alternate exterior angle 339a is at a 45-degree angle. Similarly, one of the negative resilient members 312b is positioned at an angle 337b to the central axis A and the other of the negative resilient member 312b is positioned at an alternate exterior angle 339b to the central axis A. In the present embodiment, the angle 337b is a 90-degree angle and the alternate exterior angle 339b is a 90-degree angle. In other embodiments, the resilient members 312 may be positioned at any suitable angles such that the resilient members 312 form a spiral shape.

Once the battery pack 18 is received within the battery pack interface 14, the plurality of resilient members 312 interact with the first end 26a of the battery pack 18. More specifically, the bump portion 336a, 336b of each resilient member 312a, 312b interacts with the first end 26a of the battery pack 18. The pin 320 also interacts with the first end 26a of the battery pack 18 such that the pin 320 moves to the retracted position. The positive resilient members 312a are positioned along the terminal cap 300 to interact with the positive battery terminal 30 of the battery pack 18. The negative resilient members 312b are positioned along the terminal cap 46 to interact with the negative battery terminal 34 of the battery pack 18. When the plurality of resilient members 312 interact with the first end 26a of the battery pack 18, the bump portion 336a, 336b of each resilient member 312a, 312b is pressed against the support body 308 and received within a respective groove 352a, 352b defined within the support body 308. The positive and negative resilient members 312a, 312b are configured to provide an electrical connection between the battery pack 18 and the battery pack interface 14 so that the battery pack 18 is able to power the power tool 10. The pin 320 is arranged to interact with the NTC thermistor 36 of the battery pack 18 for monitoring the temperature of the battery pack 18.

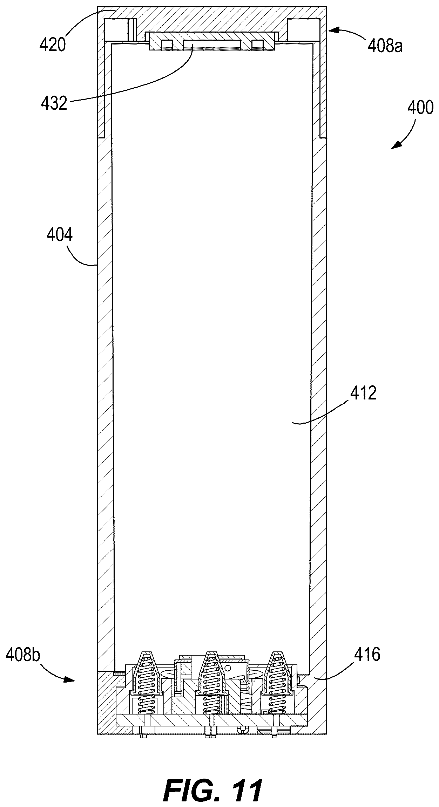

FIG. 11 illustrates a battery pack interface 400 according to another embodiment. The battery pack interface 400 includes an interface housing or external housing 404. The external housing 404 of the battery pack interface 400 has a first end 408a and a second end 408b opposite the first end 408a. An interior housing 412 of the battery pack interface 400 is formed within the external housing 404 and extends between the first and second ends 408a, 408b. The interior housing 412 is formed as a tube configured to receive a battery pack (e.g., the battery pack 18 of FIG. 2).

The battery pack interface 400 further includes a first cap or terminal cap 416 and a second cap or end cap 420. In the illustrated embodiment, the terminal cap 416 is the same as the terminal cap 200 of FIGS. 9A and 9B. In other embodiments, the terminal cap 416 may be the same as the terminal caps 100, 300, 416 of FIGS. 4, 5, 8A, 8B, 10A, and 10B. The end cap 420 is removably coupled to the first end 408a of the external housing 404. The terminal cap 416 is permanently coupled to the second end 408b of the external housing 404.

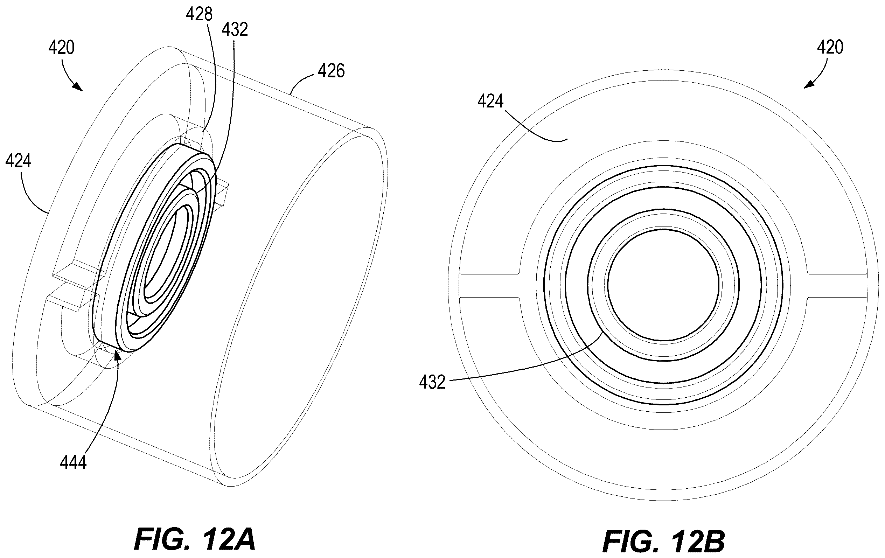

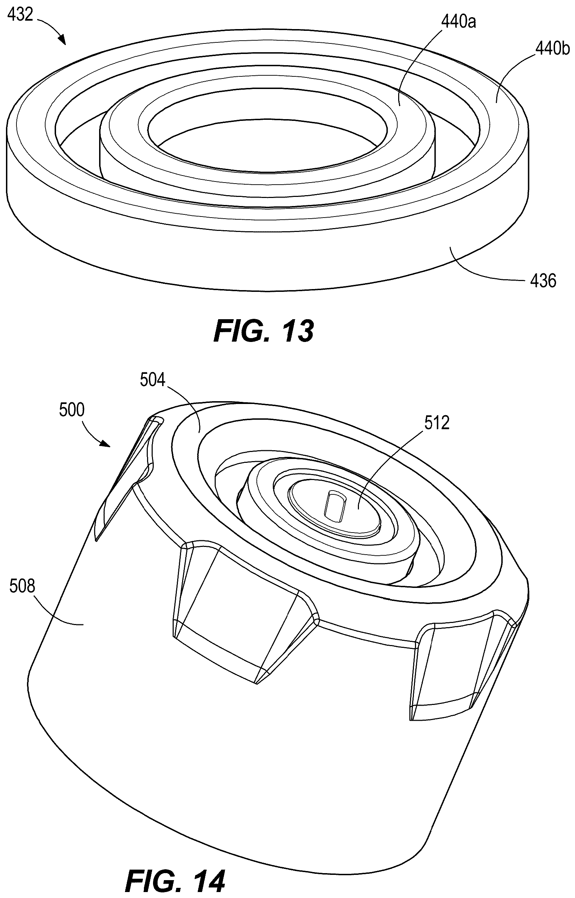

With reference to FIGS. 12A, 12B, and 13, the end cap 420 is illustrated. The end cap 420 includes a top portion 424 and an elongated rim 426 for coupling the end cap 420 to the first end 408a of the external housing 404. The rim elongated 426 is integrally formed with and extending from the top portion 424. When coupled to the external housing 404, the top portion 424 and the elongated rim 426 of the end cap 420 form a portion of the interior housing 412. A protrusion 428 is formed along the top portion 424 and extends into the interior housing 412 when the end cap 420 is coupled to the external housing 404.

The end cap 420 further includes a resilient member or rubber bumper 432 coupled to the top portion 424. In other embodiments, the rubber bumper 432 may be a foam pad or other resilient members. The rubber bumper 432 has a body 436, a first or internal protrusion 440a extending from the body 436, and a second or external protrusion 440b extending from the body 436 and surrounding the internal protrusion 440a. When coupled to the top portion 424, the rubber bumper 432 is received within a recess 444 defined within the protrusion 428 of the top portion 424. As such, the rubber bumper 432 is fixedly coupled to the top portion 424 at a central portion of the end cap 420. When the end cap 420 is coupled to the battery pack interface 400, the rubber bumper 432 is configured to bias and urge the battery pack in a direction toward the terminal cap 416. As such, the battery pack is pressed against the terminal cap 416 so that an electrical connection is provided between the terminal cap 416 and the battery pack.

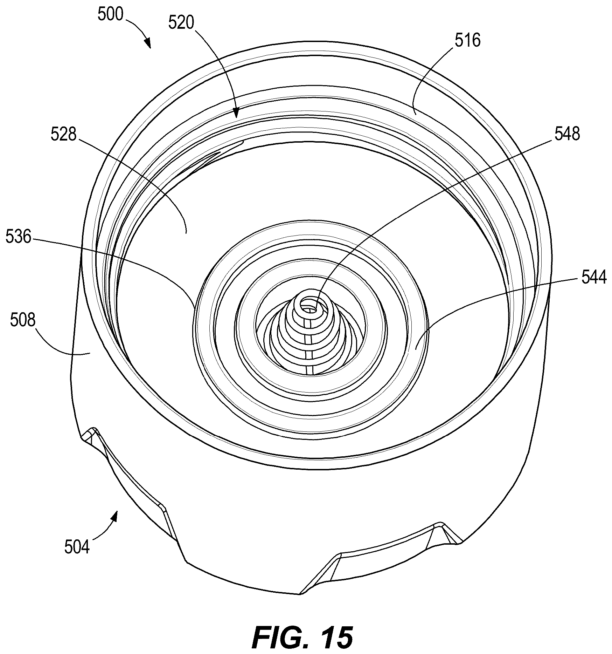

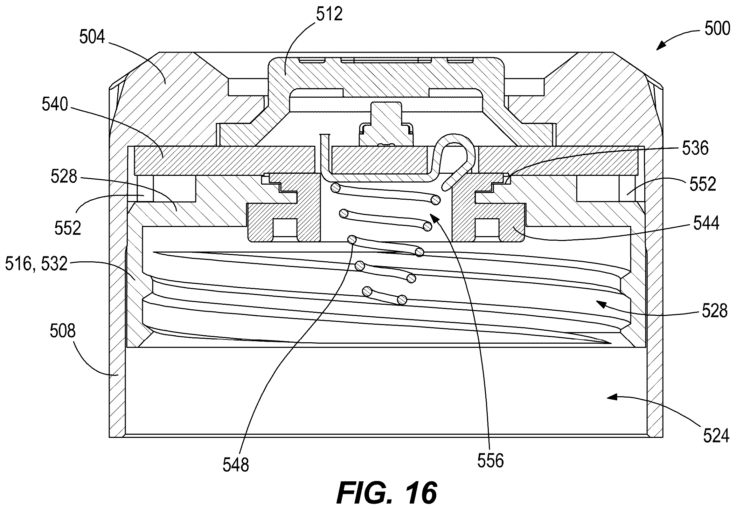

FIGS. 14-16 illustrate an alternative end cap 500 that may be incorporated with the battery pack interfaces 14, 400 as discussed herein. The end cap 500 includes a top portion 504, an elongated rim 508 extending from the top portion 504, a power button 512 coupled to the top portion 504, and a rigid core 516 having an internal threaded portion 520 formed thereon. The top portion 504 and the elongated rim 508 are integrally formed together to define an interior space 524 (FIG. 16) of the end cap 500, in which the rigid core 516 is disposed. The rigid core 516 has a base 528 and a skirt 532. The internal threaded portion 520 is formed on the skirt 532. Also, a central bore 536 is defined through the base 528 of the rigid core 516. The skirt 532 extends from the base 528 and is encased by at least a portion of the elongated rim 508.

With continued reference to FIGS. 14-16, the end cap 500 further includes a PCB 540 coupled to the elongated rim 508, a resilient member or rubber bumper 544 disposed along the PCB 540, and a spring 548. The PCB 540 has two key portions (not shown) extending therefrom and respectively received within keyways 552 defined along the elongated rim 508. The PCB 540 is sandwiched or arranged between the top portion 504 and the rigid core 516. The rubber bumper 544 is disposed within the central bore 536 of the base 528 to fixedly couple the rubber bumper 544 to the rigid core 516. The spring 548 is coupled to a center of the PCB 540 and passes through a central hole 556, defined within the rubber bumper 544, to extend into the interior space 524.

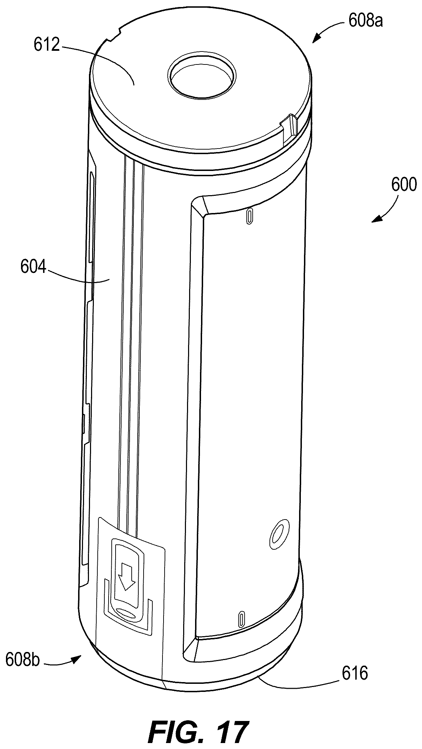

With reference to FIG. 17, a battery pack 600 is illustrated. Similar to the battery pack 18 of FIG. 2, the battery pack 600 is a stand-alone rechargeable lithium USB battery that may be used to supply power to a device. The battery pack 600 has a cylindrical shape and includes a body 604 with a first end 608a and a second end 608b opposite the first end 608a. A lithium-ion cell (not shown) is disposed within the body 604 of the battery pack 18. The battery pack 600 further includes a negative battery terminal 612 on the first end 608a and a positive battery terminal 616 on the second end 608b. More specifically, the negative battery terminal 612 is located on an anode end of the battery pack 600.

Once the battery pack 600 is received within the battery pack interface 14, 400, the end cap 500 may then be coupled to the external housing 38, 404. The end cap 500 is threadedly coupled to the external housing 38, 404 via the internal threaded portion 520 of the rigid core 516. The rubber bumper 544 and the spring 548 are configured to bias and urge the battery pack 600 in a direction toward a terminal cap 46, 416. The battery pack 600 is then pressed against the terminal cap 46, 416 so that an electrical connection is provided between the terminal cap 46, 416 and the battery pack 600. In addition, the power button 512 is purposely provided along the top portion 504 of the end cap 500 and connected to the negative battery terminal 612 of the battery pack 600. The location of the power button 512 allows the end cap 500 to cooperate with a device, such as a flashlight. As such, the combination of the rubber bumper 544 and the spring 548 is provided as an alternative embodiment to accommodate the location of the power button 512.

Although the disclosure has been described in detail with reference to certain preferred embodiments, variations and modifications exist within the scope and spirit of one or more independent aspects of the disclosure as described.

Various features of the disclosure are set forth in the following claims.

### REPRESENTATIVE FEATURES

Representative features are set out in the following clauses, which stand alone or may be combined, in any combination, with one or more features disclosed in the text and/or drawings of the specification.
1. A power tool comprising:
   a housing;
   a battery pack including a body having a first end and a second end opposite the first end, a positive battery terminal disposed on the first end of the body, and a negative battery terminal disposed on the first end of the body; and
   a battery pack interface supported by the housing and configured to receive the battery pack, the battery pack interface including
      a first cap having a plurality of resilient members configured to interact with the first end of the battery pack, and
      a second cap configured to secure the battery pack within the battery pack interface.
2. The power tool of clause 1, wherein the positive battery terminal has a ring shape and is positioned to surround the negative battery terminal, and wherein the negative battery terminal is concentric with the positive battery terminal.
3. The power tool of clause 1, wherein each resilient member is formed as a pogo pin.
4. The power tool of clause 1, wherein each resilient member is formed as a leaf spring.
5. The power tool of clause 1, further comprising
   a motor disposed within the housing; and
   an output drive supported by the housing and configured to be driven by the motor.
6. The power tool of clause 1, wherein the battery pack includes a negative temperature coefficient thermistor disposed at a central portion of the battery pack such that the negative battery terminal is positioned to surround the negative temperature coefficient thermistor, and wherein one of the plurality of resilient members is configured to interact with the negative temperature coefficient thermistor.
7. A power tool comprising:
   a housing; and
   a battery pack interface supported by the housing, the battery pack interface including
      an interface housing defining an interface axis extending centrally through the battery pack interface, the interface housing configured to receive a battery pack,
      a first cap coupled to a first end of the housing, the first cap having at least one positive battery contact and at least one negative battery contact, the at least one negative battery contact is located closer to the interface axis than the at least one positive battery contact, and
      a second cap removably coupled to a second end of the housing opposite the first end, the second cap configured to secure the battery pack within the battery pack interface.
8. The power tool of clause 7, wherein the at least one positive battery contact is located at a first distance from the interface axis, wherein the at least one negative battery contact is located at a second distance from the interface axis, and wherein the first distance is greater than the second distance.
9. The power tool of clause 7, wherein the at least one positive battery contact and the at least one negative battery contact are formed as pogo pins.
10. The power tool of clause 7, wherein the at least one positive battery contact and the at least one negative battery contact are formed as leaf springs.
11. The power tool of clause 10, wherein the at least one positive battery contact and the at least one negative battery contact each include a bump portion configured to interact with the battery pack.
12. The power tool of clause 11, wherein the bump portion of the at least one positive battery contact is located at a first distance from the interface axis, wherein the bump portion of the at least one negative battery contact is located at a second distance from the interface axis, and wherein the first distance is greater than the second distance.
13. A power tool comprising:
   a housing;
   a battery pack including a positive battery terminal and a negative battery terminal concentric with the positive battery terminal; and
   a battery pack interface supported by the housing, the battery pack interface including
      an interface housing configured to receive the battery pack,
      a first cap coupled to a first end of the housing, the first cap having a first set of resilient members positioned to interact with the positive battery terminal and a second set of resilient members positioned to interact with the negative battery terminal, and
      a second cap removably coupled to a second end of the housing opposite the first end, the second cap having a spring configured to bias the battery pack against the first set of resilient members and the second set of resilient members.
14. The power tool of clause 13, wherein the second set of resilient members is located closer to a central portion of the battery pack interface than the first set of resilient members.
15. The power tool of clause 13, wherein the first set of resilient members and the second set of resilient members are formed as pogo pins.
16. The power tool of clause 13, wherein the first set of resilient members and the second set of resilient members are formed as leaf springs.
17. The power tool of clause 13, wherein the positive battery terminal and the negative battery terminal are positioned on a same end of the battery pack.
18. The power tool of clause 13, further comprising
   a motor disposed within the housing; and
   an output drive supported by the housing and configured to be driven by the motor.
19. The power tool of clause 13, wherein the battery pack includes a negative temperature coefficient thermistor disposed at a central portion of the battery pack such that the negative battery terminal is positioned to surround the negative temperature coefficient thermistor, and wherein the first cap includes a negative temperature coefficient contact configured to interact with the negative temperature coefficient thermistor.
20. The power tool of clause 13, wherein the first cap is permanently coupled to the first end of the housing.

## Claims

1. A power tool comprising:
a housing;
a battery pack including a body having a first end and a second end opposite the first end, a positive battery terminal disposed on the first end of the body, and a negative battery terminal disposed on the first end of the body; and
a battery pack interface supported by the housing and configured to receive the battery pack, the battery pack interface including
a first cap having a plurality of resilient members configured to interact with the first end of the battery pack, and
a second cap configured to secure the battery pack within the battery pack interface.

2. The power tool of claim 1, wherein the positive battery terminal has a ring shape and is positioned to surround the negative battery terminal, and wherein the negative battery terminal is concentric with the positive battery terminal.

3. The power tool of claim 1, wherein each resilient member is formed as a pogo pin or is formed as a leaf spring.

4. The power tool of claim 1, further comprising
a motor disposed within the housing; and
an output drive supported by the housing and configured to be driven by the motor.

5. The power tool of claim 1, wherein the battery pack includes a negative temperature coefficient thermistor disposed at a central portion of the battery pack such that the negative battery terminal is positioned to surround the negative temperature coefficient thermistor, and wherein one of the plurality of resilient members is configured to interact with the negative temperature coefficient thermistor.

6. A power tool comprising:
a housing; and
a battery pack interface supported by the housing, the battery pack interface including
an interface housing defining an interface axis extending centrally through the battery pack interface, the interface housing configured to receive a battery pack,
a first cap coupled to a first end of the housing, the first cap having at least one positive battery contact and at least one negative battery contact, the at least one negative battery contact is located closer to the interface axis than the at least one positive battery contact, and
a second cap removably coupled to a second end of the housing opposite the first end, the second cap configured to secure the battery pack within the battery pack interface.

7. The power tool of claim 6, wherein the at least one positive battery contact is located at a first distance from the interface axis, wherein the at least one negative battery contact is located at a second distance from the interface axis, and wherein the first distance is greater than the second distance.

8. The power tool of claim 6, wherein the at least one positive battery contact and the at least one negative battery contact are formed as pogo pins, or wherein the at least one positive battery contact and the at least one negative battery contact are formed as leaf springs.

9. The power tool of claim 8, wherein the at least one positive battery contact and the at least one negative battery contact each include a bump portion configured to interact with the battery pack, preferably wherein the bump portion of the at least one positive battery contact is located at a first distance from the interface axis, wherein the bump portion of the at least one negative battery contact is located at a second distance from the interface axis, and wherein the first distance is greater than the second distance.

10. A power tool comprising:
a housing;
a battery pack including a positive battery terminal and a negative battery terminal concentric with the positive battery terminal; and
a battery pack interface supported by the housing, the battery pack interface including
an interface housing configured to receive the battery pack,
a first cap coupled to a first end of the housing, the first cap having a first set of resilient members positioned to interact with the positive battery terminal and a second set of resilient members positioned to interact with the negative battery terminal, and
a second cap removably coupled to a second end of the housing opposite the first end, the second cap having a spring configured to bias the battery pack against the first set of resilient members and the second set of resilient members.

11. The power tool of claim 10, wherein the second set of resilient members is located closer to a central portion of the battery pack interface than the first set of resilient members.

12. The power tool of claim 10, wherein the first set of resilient members and the second set of resilient members are formed as pogo pins, or wherein the first set of resilient members and the second set of resilient members are formed as leaf springs.

13. The power tool of claim 10, wherein the positive battery terminal and the negative battery terminal are positioned on a same end of the battery pack, or
further comprising
a motor disposed within the housing; and
an output drive supported by the housing and configured to be driven by the motor.

14. The power tool of claim 10, wherein the battery pack includes a negative temperature coefficient thermistor disposed at a central portion of the battery pack such that the negative battery terminal is positioned to surround the negative temperature coefficient thermistor, and wherein the first cap includes a negative temperature coefficient contact configured to interact with the negative temperature coefficient thermistor.

15. The power tool of claim 10, wherein the first cap is permanently coupled to the first end of the housing.
